# EUROPEAN PATENT APPLICATION

(11) **EP 1 662 422 A1**
(43) Date of publication of application: **31.05.2006**
(21) Application number: 04257307.1
(22) Date of filing: 24.11.2004
(51) Int. Cl.: G06K 7/00, H01R 27/00

(54) **5-In-1 connector for memory cards**

(71) Applicant: WEM Technology Inc., Taipei (TW)
(72) Inventor: Hsiao, Wen-Hsiang, Taipei (TW)
(74) Representative: Prentice, Raymond Roy

(57) **Abstract**

A 5-in-1 connector (10) for memory cards is disclosed having two slots on one side of a main body (11) thereof, there are a plurality of contact pin sets arranged in the two slots; in which a first slot (12) has therein a first positioning portion (121) for positioning one of an SD memory card (21) (Secure Digital Card), an MMC memory card (MultiMedia Card) and an RSMMC memory card (Reduced Size MultiMedia Card); and has a second positioning portion (122) for positioning a mini SD memory card (22) (mini-Secure Digital Card); and has a guiding member (15) for guiding the mini SD memory card (22); the second slot (13) has a third positioning portion (131) for positioning a TF memory card (23) (TransFlash card). Thereby, the 5-in-1 connector (10) for memory cards is formed to make circuit connection of an SD (21), an MMC, an RCMMC, a mini SD (22) and a TF memory card (23) with an electric device.

## Description

### BACKGROUND OF THE INVENTION

### 1. Field of the Invention

The present invention is related to an improved structure of a connector for memory cards, and especially to a 5-in-1 connector to make circuit connection of an SD memory card (Secure Digital Card), an MMC memory card (MultiMedia Card), an RCMMC memory card (Reduced Size Multimedia Card), a mini SD memory card (mini-Secure Digital Card) and a TF memory card (TransFlash card) with an electric device.

### 2. Description of the Prior Art

In the recent years, storing carriers of the type of memory cards (or called as flash memory cards) has superior features of being light, thin and small, having high storing capabilities, vibration durability and repeated memorizing for many times etc. , thereby they are widely applied on household electric appliances of information, personal computers or portable digital products (hereinafter unitarily called as electric devices).

Normal electric devices using memory cards (such as digital cameras, PDA's and digital walkmans etc.) as storing carriers basically still take memory cards of specific types as data storing carriers, the most popular memory card types include CF cards (CompactFlash cards), SM cards (Smart Media Cards), MS cards (Memory Stick Cards), SD cards (Secure Digital Cards), MMC cards (MultiMedia Cards), RSMMC cards (Reduced-Size MultiMedia a Cards) etc., and even there are mini SDmemory cards (mini-Secure Digital Cards) in the markets specific for cell phones and TF memory cards (TransFlash cards).

Hence for the masses of consumers, as a matter of course, a memory card is unable to effectively make communication among the electric devices including portable digital products, computer systems and peripheral equipment of computers etc. , and even limitations are created in selecting and purchasing products of consumers; as a result, partial manufacturers of memory cards developed memory cards coincident with the existed memory cards in specifications but having smaller sizes, in order to meet the portable digital electric devices with smaller volumes in use; for example, SD cards and MMC cards are memory cards with same contour sizes; while the chips and specifications of circuits (transmission protocol) of RSMMC memory cards are same to those of MMC memory cards, but their contour sizes are slightly smaller than those of the MMC memory cards; similarly, the chips and specifications of circuits of mini SD memory cards are same to those of SD memory cards, but their contour sizes are slightly smaller than those of the SD memory cards.

By the fact that the contours of RSMMC memory cards and mini SD memory cards are slightly different from those of MMC memory cards and SDmemory cards; for the existed techniques presently, there has been a connector simultaneously common to four types of memory cards including an SD, an MMC, an RSMMC and a mini SD memory card; however, there has not yet been a connector suitable for inserting therein a TF memory card. In view of this, promotion of TF memory cards still has its limitation to the condition of compatibility.

### SUMMARY OF THE INVENTION

Therefore, a 5-in-1 connector for memory cards of the present invention has two slots on one side of a main body of the connector, and there are a plurality of contact pin sets arranged in the two slots; in which a first slot has therein a first positioning portion for positioning one of an SD memory card, an MMC memory card and an RSMMC memory card; and has a second positioning portion for positioning a mini SD memory card, and has a guiding member for guiding the mini SD memory card; the second slot has a third positioning portion for positioning a TF memory card. Thereby, the connector forms a 5-in-1 connector to make circuit connection of an SD, an MMC, an RCMMC, a mini SD and a TF memory card with an electric device.

The present invention will be apparent in its structural combination and the entire mode of operation thereof after reading the detailed description of the preferred embodiment thereof in reference to the accompanying drawings.

### BRIEF DESCRIPTION OF THE DRAWINGS

Fig. 1 is a schematic perspective view showing the apparent structure of the 5-in-1 connector of the present invention;
Fig. 2 is a front view showing the structure of the 5-in-l connector of the present invention;
Fig. 3 is a top view showing the structure of the 5-in-1 connector of the present invention;
Fig. 4 is a perspective view showing the state of connection of an SD memory card wi th the connector of the present invention;
Fig. 5 is a perspective view showing the state of connection of a mini SD memory card with the connector of the present invention;
Fig. 6 is a perspective view showing the state of connection of a TF memory card with the connector of the present invention.

### DETAILED DESCRIPTION OF THE PREFERRED EMBODIMENT

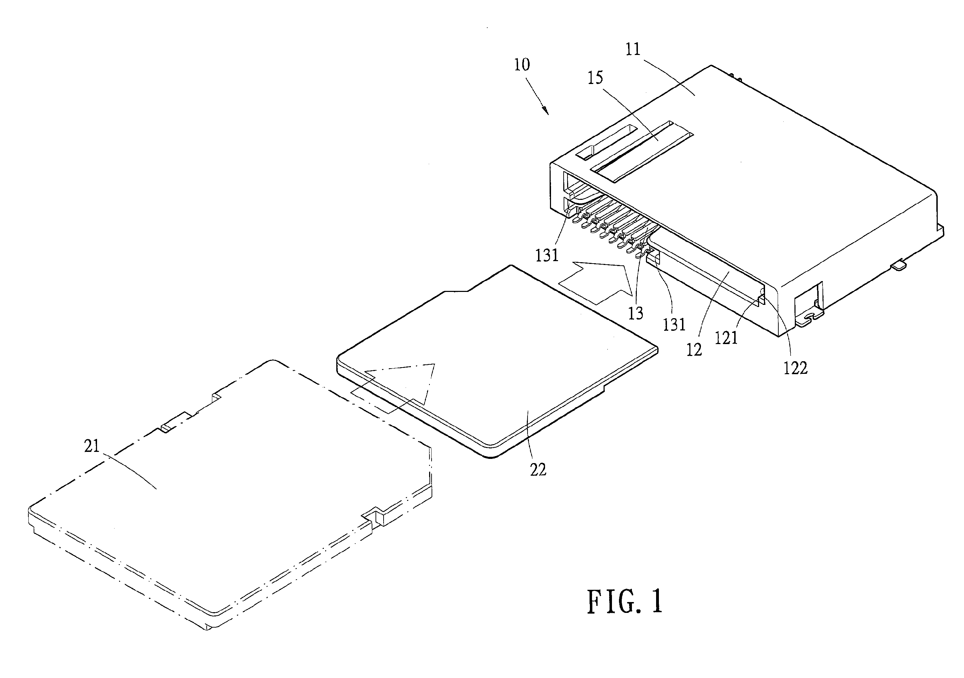

The basic structure combination of the entire 5-in-1 connector for memory cards of the present invention is as shown in Figs. 1 to 3, wherein the connector marked with a number 10 has a main body 11 in the form of a cartridge; the main body 11 has on one side thereof a first slot 12 and a second slot 13 for insertion and positioning of memory cards, and there are a plurality of contact pin sets arranged in the two slots 12, 13 to make circuit connection of the memory cards with an electric device.

By virtue that the 5-in-1 connector 10 of the present invention is used mainly to make circuit connection of the SD, MMC, RCMMC, mini SD and TF memory cards with the electric device, in the whole connector 10; the first slot 12 has therein a first positioning portion 121 for positioning one of an SDmemory card, an MMC memory card and an RSMMC memory card, and has a second positioning portion 122 for positioning a mini SD memory card; and has a guiding member 15 for guiding the mini SD memory card; the second slot 13 has a third positioning portion 131 for positioning a TF memory card.

In the embodiment, the main body 11 is provided a depth therein with a first contact pin set 141 to make circuit connection of one of an SD memory card, an MMC memory card and an RSMMC memory card with the connector 10, and is provided nearer to one side to the first slot 12 with a second contact pin set 142 to make circuit connection of a mini SD memory card with the connector 10; the second slot 13 is provided a depth therein with a third contact pin set 143 to make circuit connection of a TF memory card with the connector 10.

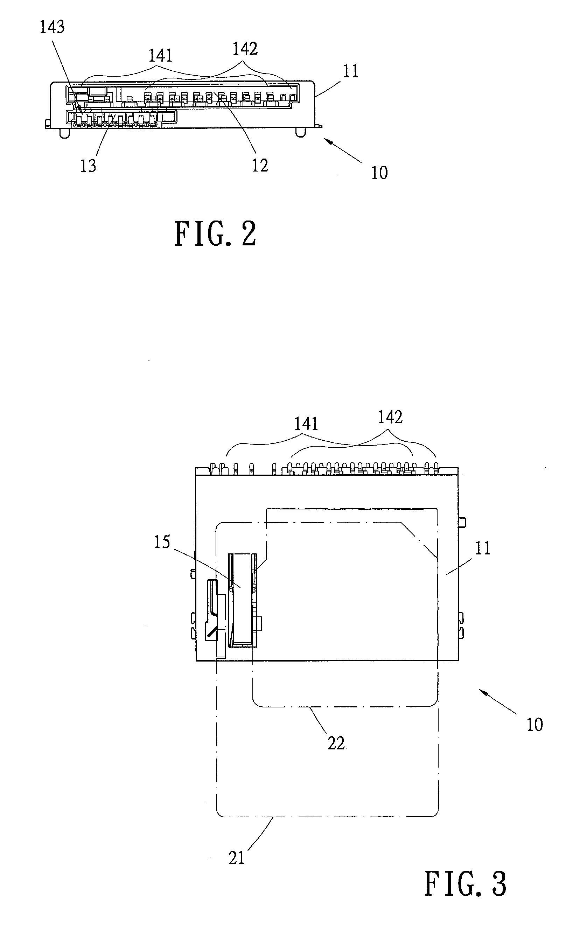

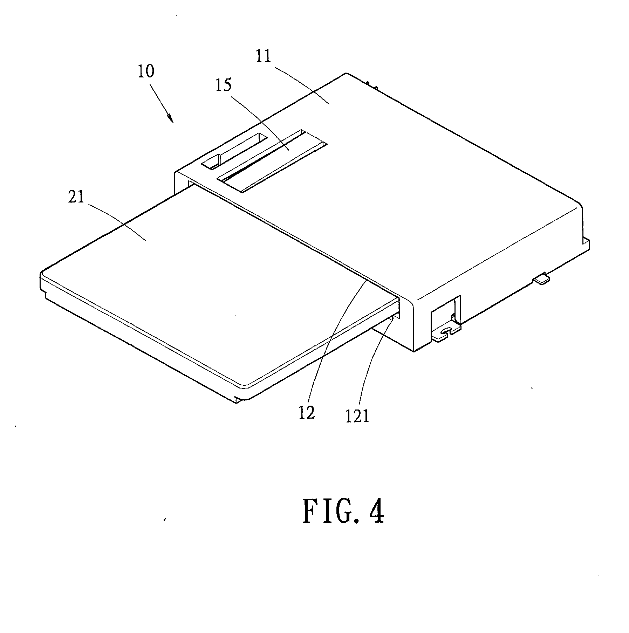

And more, the guiding member 15 in the first slot 12 mainly is to help to guide the mini SD memory card to be surely inserted to a position having the second contact pin set 142 for positioning. As is shown in Fig. 4, an SD memory card 21 is used to represent any of an SD, an MMC and an RCMMC to connect with the connector 10 after inserting; the SD memory card 21 (or the MMC memory card with the same contour) is inserted into the first slot 12 at the front side of the main body 11. At this time, the guiding member 15 will not affect the action of inserting and drawing out the SD memory card 21 (or the MMC memory card); the contact points of the circuit of the SD memory card 21 can be surely contacted with the first contact pin set 141 (referring to Fig. 3) by the framing/guiding action of the first contact pin set 141 in the first slot 12.

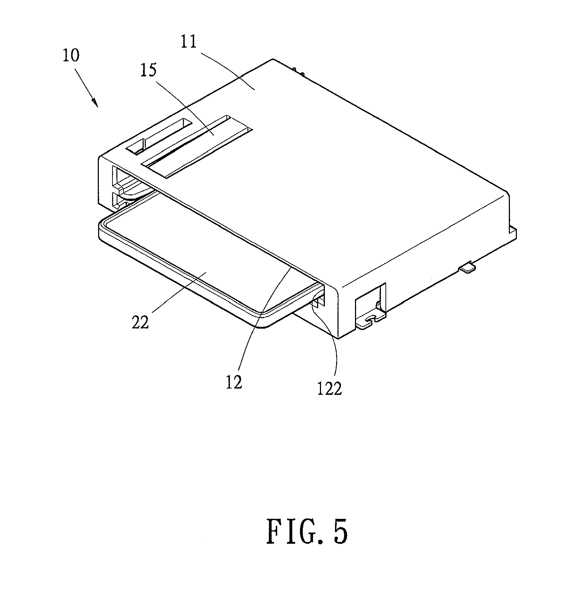

Fig. 5 and 3 disclose a state of insertion and connection of a mini SD memory card 22 with the connector 10; the mini SD memory card 22 is similarly inserted into the first slot 12 at the front side of the main body 11. At this time, the guiding member 15 will guide the mini SD memory card 22 into the first slot 12 at the side having the second contact pin set 142 to make the mini SD memory card 22 surely get circuit connection with the connector 10.

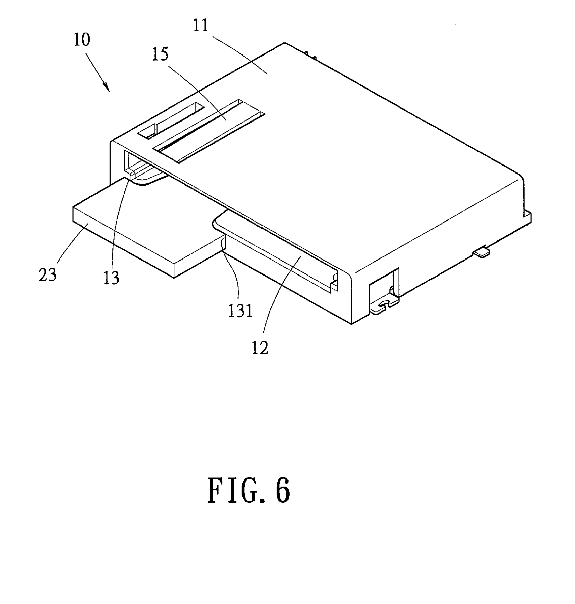

Further as shown in Fig. 6, a TF memory card 23 has an apparent size evidently smaller than that of the above mentioned SD, MMC, RCMMC memory card or mini SD memory card; and the second slot 13 is equal by width to the TFmemory card 23, and is provided therein with the specific third contact pin set 143 (referring to Fig. 2); hence in practical using, the TF memory card 23 needs only to be inserted as is shown into the second slot 13 at the front side of the main body 11, it can surely get circuit connection with the connector 10 under the action of the third positioning portion 131.

Therefore, the 5-in-1 connector is formed, it makes circuit connection of the SD, MMC, RCMMC, mini SD and TF memory cards with the electric device; in practicing, it not only can be directly built in the circuit of the electric device, but also can be used as a card reader connected externally of the electric device; this can largely increase compatibility and convenience in connecting for use of the electric device with the storing carriers including the SD, MMC, RCMMC, mini SD and TF memory cards, and the added function of the electric device can thus be enhanced.

Accordingly, the present invention provides a 5-in-1 connector to make circuit connection of an SD, an MMC, an RCMMC, a mini SD and a TF memory card with an electric device. The above description and drawings are only for illustrating a preferred embodiment of the present invention, and not for giving any limitation to the scope of the present invention. It will be apparent to those skilled in this art that various equivalent modifications or changes without departing from the spirit, scope and characteristic of this invention shall also fall wi thin the scope of the appended claims of the present invention.

## Claims

1. A 5-in-1 connector for memory cards, said connector has a main body having on one side thereof a first slot and a second slot, a plurality of contact pin sets are arranged in said two slots to make circuit connection of five kinds of memory cards with an electric device; said connector is **characterized in that**:
said first slot has therein a first positioning portion for positioning one of an SD memory card, an MMC memory card and an RSMMC memory card, a second positioning portion for positioning a mini SD memory card, and has a guiding member for guiding said mini SD memory card; said second slot has a third positioning portion for positioning a TF memory card; thereby said 5-in-1 connector is formed to make circuit connection of said SD, MMC, RCMMC, mini SD and TF memory cards with said electric device.

2. The 5-in-1 connector for memory cards as in claim 1, wherein said first slot is provided therein with a first contact pin set to make circuit connection of said one of an SD memory card, an MMC memory card and an RSMMC memory card with said connector, and is provided with a second contact pin set to make circuit connection of said mini SD memory card with said connector; said second slot is provided therein with a third contact pin set to make circuit connection of said TF memory card with said connector.
